# EUROPÄISCHE PATENTSCHRIFT

(11) **EP 1 680 322 B1**
(45) Veröffentlichungstag und Bekanntmachung des Hinweises auf die Patenterteilung: **09.04.2008**
(21) Anmeldenummer: 04765748.1
(22) Anmeldetag: 28.09.2004
(51) Int. Cl.: B64D 11/06, B60N 2/68

(54) **SITZ, INSBESONDERE FLUGGASTSITZ**
SEAT, PARTICULARLY AN AIR PASSENGER SEAT
SIEGE, EN PARTICULIER SIEGE POUR PASSAGER D'AERONEF

(30) Priorität: 05.11.2003 DE 10351692
(43) Veröffentlichungstag der Anmeldung: 19.07.2006
(73) Patentinhaber: Recaro Aircraft Seating GmbH & Co. KG, 74523 Schwäbisch Hall (DE)
(72) Erfinder: KRAUTH, Hubert, 74535 Mainhardt (DE); FORGATSCH, Oliver, 88709 Meersburg (DE); NOWAK, Andreas, 71546 Aspach (DE)
(74) Vertreter: Daub, Thomas
(86) Internationale Anmeldenummer: PCT/EP2004/010986
(87) Internationale Veröffentlichungsnummer: WO 2005/051764

(56) Entgegenhaltungen:
- EP-A- 0 989 019
- DE-A- 1 945 583
- DE-A- 4 138 647
- US-A- 5 685 614

## Beschreibung

Die Erfindung betrifft einen Sitz, insbesondere Fluggastsitz, gemäß der Merkmalsausgestaltung des Oberbegriffes des Patentanspruches 1.

Durch die DE 100 50 151 C1 ist ein Rückenlehnenelement für ein Sitzmöbel bekannt mit einem die Randkontur bildenden Rahmen aus Holz, Leichtmetall oder Kunststoff, welcher eine wenigstens bereichsweise in die Randschmalseite eingebrachte Nut aufweist, sowie mit einer über den Rahmen gezogenen taschenartigen Bespannung mit einem mit der Nut in der Gebrauchslage korrespondierenden und in die Nut eingreifenden, innerhalb der Tasche an der Bespannung ausgebildeten Keder. In weiterer Ausgestaltung der bekannten Lösung ist vorgesehen, dass die den Keder aufnehmende Nut in den Seitenrändern und im oberen Lehnenrand des Rahmens ausgebildet ist, wobei in zusätzlicher Ausgestaltung vorgesehen sein kann, dass die Randkanten der Seitenränder des Rahmens im unteren Bereich geringfügig nach innen rückspringend und ohne Nut ausgebildet sind. Bei der bekannten Lösung ist die Rückenlehne gekrümmt gestaltet, um derart einen optimalen Sitzkomfort und insbesondere eine Unterstützung des Rückens eines Sitzbenutzers zu erreichen. Ferner ist das Rahmenteil aus einer Art Rückenlehnenschale gebildet mit vorderseitig und rückseitig angeordneten Anlageflächen für das jeweilige Bespannteil, wobei anstelle von textilen Bespannungen auch solche aus Kunststoff oder Leder sowie aus Mischmaterialien verwendbar sind und der jeweilige Mittenbereich ist von dem Rückenlehnenelement freigelassen, so dass insoweit ohne weitere Unterstützung die Bespannung der Rückenlehne verläuft. Aufgrund der elastischen Ausgestaltung des jeweiligen Bespannteils ist dennoch der Rückenbereich eines Sitzbenutzers sicher und komfortabel während des Sitzvorganges abgestützt.

Bei der bekannten Lösung ist die Bespannung der Rückenlehne am seitlichen Randteil geführt, ohne dass es zum ungewollten Verrutschen der Bespannung kommen kann, da der innen liegende Keder der Bespannung innerhalb der Kedernut geführt ist. Die bekannte Lösung läßt sich jedoch nicht auf Sitze, wie Fahrzeugsitze oder Fluggastsitze, übertragen, da zum einen die Rahmenstruktur zu schwach ausgelegt ist, um im Crashfall die hierbei auftretenden Kräfte sicher aufnehmen zu können, und des weiteren ist nicht sichergestellt, dass bei einer hohen Belastung der Rückenlehnenstruktur das Bespannteil und mithin das Kederprofil aus der aufnehmenden Nut in den Seitenrändern des Rahmenteils ungewollt herausgezogen wird, was das Lösen der Bespannung von der Rückenlehne zur Folge hat.

Durch die DE 41 38 647 A ist ein gattungsgemäßer Sitz, insbesondere Fluggastsitz, bekannt mit einem Sitzteil und einer Rückenlehne, die ein Rückenlehnenelement aufweist mit einem gebogenen einstückigen Rahmenteil, das aus mindestens einem Hohlprofil besteht, wobei zumindest teilweise das Rahmenteil mindestens ein weiteres Hohlprofil aufweist, wobei die aneinandergrenzenden Hohlprofile in üblicher Bewegungsrichtung (Flugrichtung) des Sitzes hintereinander liegend angeordnet sind, wobei in der Gebrauchsstellung im unteren Bereich, vorzugsweise im Bereich des unteren Drittels des Rückenlehnenelementes, dasselbe das Doppelkammerhohlprofil aufweist und wobei der Querschnitt des in üblicher Bewegungsrichtung (Flugrichtung) vorangehenden Hohlprofils gleich oder größer dem Querschnitt des nachfolgenden Hohlprofils ist. Zwar ist die bekannte Lösung für einen etwaigen Crashfall entsprechend steif ausgelegt, bei dennoch reduziertem Bauteilegewicht; allein die Bespannung erfolgt nach wie vor in konventioneller Weise, was zu den vorstehend bereits beschriebenen Nachteilen führt.

Zwar zeigt die US 5,685,614 A für eine vergleichbare Sitzanordnung eine Rückenlehnenstruktur mit Mehrkammer-Hohlprofil-Ausgestaltung, bei der im Sinne eines Teilmerkmals des kennzeichnenden Teils des Patentanspruches 1 die der üblichen Bewegungsrichtung (Flugrichtung) zugekehrte Kammerwand des vorangehenden vorderen Hohlprofils mit einer in Längsrichtung der Rückenlehne verlaufenden Schräge versehen ist, die mit einer gegenüberliegenden Schräge des weiteren vorderen Hohlprofils des U-förmigen Rahmenteils ein imaginäres V ausbildet; allein die als Kastenrahmenteil konzipierte Rückenlehne baut konstruktiv schwer auf und läßt bezogen auf die Festigkeit Wünsche offen. Ferner sind die seitlich angeordneten Hohlkammerprofile, auch soweit sie in Schräganordnung verlaufen, nicht für das Festlegen eines Bespannteils der eigentlichen Sitzpolsterung vorgesehen.

Durch die DE 1 945 583 ist ein Sitzmöbel bekannt mit Rahmenteilen, die auch als Mehrkammer-Hohlprofil ausgebildet sein können. Durch diese bekannte Sitzlösung ist ein weiteres Merkmal des kennzeichnenden Teils des Patentanspruches 1 bekannt, nämlich ein Hohlprofil mit mindestens einem Längskanal zu versehen zwecks Aufnahme eines Kederprofils oder eines Stabprofils, über das sich jeweils ein flächenförmiges Bespannteil für die Rückenlehne festlegen läßt. Bei der bekannten Lösung wird insoweit das Bespannteil für die Rückenlehne entlang von nicht geneigten Hohlkammerwänden geführt, was insoweit zu einer Erhöhung der Beanspruchungen für das Bespannteil, insbesondere in einem etwaigen Crashfall, führt.

Ausgehend von diesem Stand der Technik liegt der Erfindung die Aufgabe zugrunde, einen Sitz mit einem Rückenlehnenelement zu schaffen, das insbesondere im Crashfall eine erhöhte Sicherheit erlaubt und wenig Einbaugewicht hat. Eine dahingehende Aufgabe löst ein Sitz mit den Merkmalen des Patentanspruches 1 in seiner Gesamtheit.

Dadurch, dass gemäß dem kennzeichnenden Teil des Patentanspruches 1 die der üblichen Bewegungsrichtung zugekehrte Kammerwand des vorangehenden vorderen Hohlprofils mit einer in Längsrichtung der Rückenlehne verlaufenden Schräge versehen ist, die mit der gegenüberliegenden Schräge des weiteren vorderen Hohlprofils des U-förmigen Rahmenteils ein imaginäres V ausbildet, dass zumindest teilweise längs des Rückenlehnenelementes in seiner Gebrauchsstellung das in üblicher Bewegungsrichtung hintere Hohlprofil, insbesondere im oberen Drittel, von der der Schräge gegenüberliegenden Profilwand befreit ist, dass zumindest ein Hohlprofil mit mindestens einem Längskanal versehen ist zur Aufnahme eines Kederprofils oder eines Stabprofils, über das jeweils ein flächenförmiges Bespannteil für die Rückenlehne festlegbar ist, ist dergestalt für das gebogene, einstückige Rahmenteil eine Art Zweikammer-Hohlprofil-Lösung realisiert, was das Rückenlehnenelement in den relevanten Bereichen derart aussteift, dass selbst im Crashfall die Grundrahmenstruktur des Rückenlehnenelementes im wesentlichen erhalten bleibt und diese nicht ungewollt zusammenklappt oder in einer anderen Richtung für den Sitzbenutzer schädigend versagt. Aufgrund der Hohlprofilkammer-Anordnung ist darüber hinaus die derart ausgesteifte erfindungsgemäße Lösung gewichtsmäßig nicht schwerer ausgelegt als die bekannten flächigen Anlagestrukturen bei der vorstehend beschriebenen bekannten Lösung, was insbesondere dann eine Rolle spielt, wenn der erfindungsgemäße Sitz in Flugzeugen eingesetzt wird, wo bekanntermaßen eine Gewichtsreduzierung eine Erhöhung der Nutzlast zur Folge hat. Des weiteren hat es sich gezeigt, dass die zur Komplementierung der Rückenlehne notwendigen Bespannteile sich an dahingehenden Hohlkammer-Profil-Lösungen sicherer festlegen lassen, als in den bekannten seitlichen am Rahmenteil angeordneten Nut-Kederbefestigungen.

Durch die genannte Anlageschräge für das Bespannteil und dessen Festlegung über ein Keder oder Stabprofil ist eine sichere Aufnahme für das jeweilige Bespannteil erreicht. Insbesondere wird der Teil des Bespannteils, das an dem U-förmigen Rahmenteil festgelegt ist, über die genannten Schrägen flächig abgestützt, so dass sich dergestalt ein wirksames Widerlager ergibt, und die dergestalt in den Längskanälen des vorgesehen Hohlprofils aufnehmbaren Bespannteile werden derart um mehr als 90° umgelenkt, so dass ein ungewolltes Herausziehen aus der Festlegenut im Profil mit Sicherheit vermieden ist.

Weitere vorteilhafte Ausgestaltungen des erfindungsgemäßen Sitzes sind Gegenstand des sonstigen Unteransprüche.

Im folgenden wird der erfindungsgemäße Sitz anhand der Zeichnung näher erläutert. Dabei zeigen in prinzipieller und nicht maßstäblicher Darstellung die
- Fig.1: eine perspektivische rückwärtige Ansicht auf das U-förmig gebogene einstückige Rahmenteil der Rückenlehne;
- Fig.2 und 3: in perspektivischer Draufsicht eine Ansicht auf das quer geschnittene Zweikammer-Hohlprofil des Rückenlehnenrahmenteils nach der Fig.1, einmal unter Verwendung eines Kederprofils, einmal unter Verwendung eines Festlegedrahtes oder -stabes zum Festlegen eines Bespannteils an dem genannten Rückenlehnenelement.

Ein moderner Fluggastsitz der neuesten Generation ist beispielhaft in der DE 100 19 484 der Anmelderin beschrieben. Die bekannte Lösung betrifft einen Fluggastsitz mit einem Sitzteil und einer Rückenlehne, die über mindestens eine Einstelleinrichtung relativ zueinander bewegbar gehalten sind, wobei die jeweilige Einstelleinrichtung mehrere Gelenkstellen aufweist, die zumindest teilweise über ein Stabtragwerk mit einzelnen Stabteilen miteinander verbunden sind, das das Sitzteil gegenüber einem Fahrzeug- oder Kabinenboden aufständert. Mittels einer Betätigungseinrichtung üben die Komponenten des Fluggastsitzes derart Verfahrbewegungen aus, dass das Sitzteil aus einer Ausgangsposition in mindestens eine weitere Position und umgekehrt bringbar ist. Neben dem Sitzteil sind auch die weiteren Komponenten des Sitzes, wie Fuß- und Beinauflage sowie Rückenlehne, derart in einer Vielzahl von Bewegungsfreiheitsgraden einstellbar, dass neben verschiedenen Komfortpositionen eine Ruheposition für den Sitzbenutzer erreicht ist, bei der die Rückenlehne über eine Zwangsführung bedingt durch eine Schwenkbewegung des Stabtragwerkes der Neigung des Sitzteils derart nachfolgt, dass eine schräg verlaufende Ruhefläche für den Sitz realisiert ist.

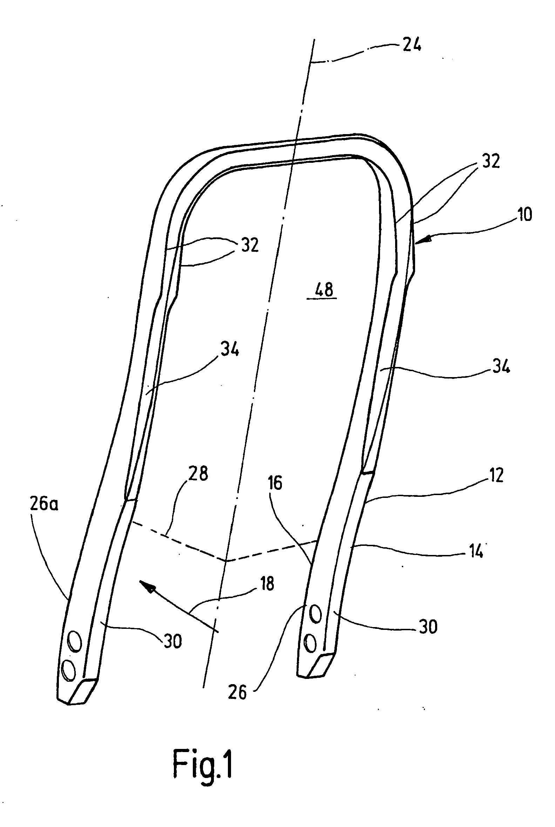

Das im folgenden beschriebene Rückenlehnenelement 10 nach den Figuren soll vorzugsweise für dahingehend aufgebaute Fluggastsitze Verwendung finden. Das genannte Rückenlehnenelement 10 ist mit einem U-förmig gebogenen einstückigen Rahmenteil 12 ausgestattet, das aus mindestens einem Hohlprofil 14 besteht. Neben diesem ersten Hohlprofil 14 weist das Rahmenteil 12 zumindest teilweise ein weiteres Hohlprofil 16 auf. Dabei sind die aneinandergrenzenden Hohlprofile 14,16 in üblicher Bewegungsrichtung (Flugrichtung 18) des Sitzes hintereinanderliegend angeordnet. Die dahingehende Flugrichtung 18 ist in der Fig. 1 mit einem Pfeil wiedergegeben.

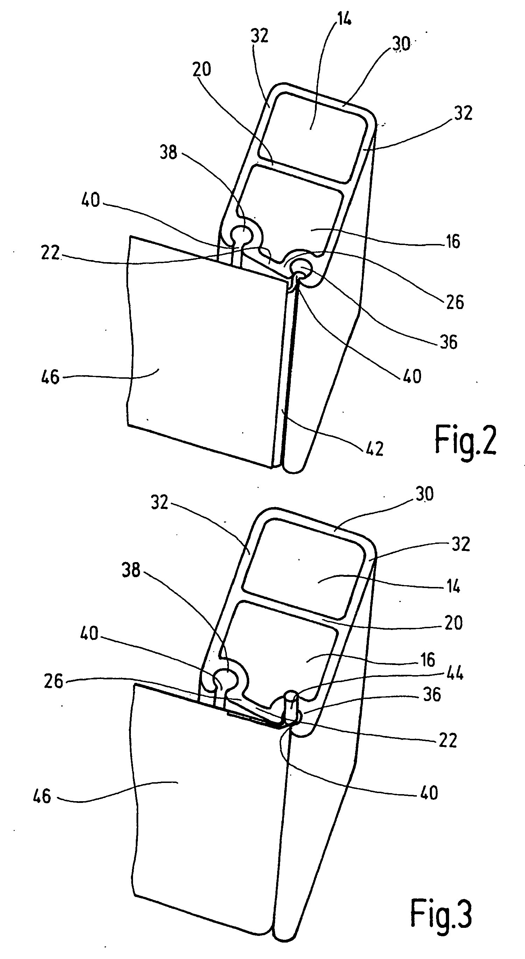

In der Gebrauchsstellung des Sitzes, wie in der Fig.1 für das Rückenelement 10 dargestellt, weist dasselbe im Bereich seines unteren Drittels das genannte Doppelkammer-Hohlprofil 14,16 auf. Wie sich insbesondere aus den Fig.2 und 3 ergibt, trennt dabei eine gemeinsame Kammerwand 20 die aneinandergrenzenden Hohlprofile voneinander ab. Wie sich des weiteren aus den Fig.2 und 3 ergibt, ist der Querschnitt des in üblicher Bewegungsrichtung (Flugrichtung 18) vorangehenden Hohlprofils 16 gleich oder größer dem Querschnitt des nachfolgenden Hohlprofils 14. Die der üblichen Bewegungsrichtung (Flugrichtung 18) zugekehrte Kammerwand 22 des vorangehenden vorderen Hohlprofils 16 ist mit einer in Längsrichtung 24 der Rückenlehne verlaufenden Schräge 26 versehen, die mit der gegenüberliegenden Schräge 26a des weiteren vorderen Hohlprofils 16 des U-förmigen Rahmenteils 12 ein imaginäres V 28 ausbildet, wobei sich in Verlängerung der Schrägen 26,26a die dahingehenden imaginären Verlängerungen sich im Bereich der Längsrichtung 24 der Rückenlehne treffen. Ansonsten sind die genannten Querschnitte der beiden Hohlprofile 14,16 im wesentlichen quadratisch bzw. rechteckförmig ausgebildet und vorzugsweise sind die Ecken des jeweiligen Profils 14,16 abgerundet.

Wie sich des weiteren aus der Fig.1 ergibt, ist das hintere Hohlprofil 14 insbesondere im oberen Drittel von der der Schräge 26,26a gegenüberliegenden Profilwand 30 befreit, so dass in diesem Bereich im wesentlichen nur die parallel zueinander verlaufenden Stegwände 32 verbleiben, die im oberen Abschlußbereich des Rahmenteils 12 noch weiter in Richtung der Kammerwand 20 zurückgeschnitten sind. Um Platz zu schaffen für die Aufnahme eines nicht näher dargestellten Tischteils, das im rückwärtigen Bereich der Rückenlehne abklappbar in diesem integriert ist, ist im mittleren Drittel des Rahmenteils 12 eine entsprechende Ausnehmung 34 dadurch realisiert, dass die genannten Stegwände 32 bis auf die genannte Kammerwand 20 gleichfalls zurückgeschnitten sind.

Sofern die Stegwände 32 im oberen Zweidrittel-Bereich des Rahmenteils 12 verbleiben, tragen sie insoweit gleichfalls zur Stabilisierung des gesamten Rückenlehnenelementes 10 mit bei. Gemäß den Darstellungen nach den Fig.2 und 3 ist die jeweilige Schräge 26,26a randseitig von je einem Längskanal 36,38 begrenzt, wobei der dahingehende Längskanal 36,38 in das Innere des weiteren Hohlprofils 16 hineinragt und derart in diesem integriert ist. Der jeweilige Längskanal 36,38 weist im Querschnitt eine Kreisringform auf und tritt in Richtung der Schräge 26,26a über eine Leistenöffnung 40 aus. Die genannten Längskanäle 36,38 dienen entweder der Aufnahme eines Kederprofils 42 (s. Fig.2) oder der Aufnahme eines Stab- oder Drahtprofils 44 (s. Fig.3).

Mittels der genannten Profile 42,44 läßt sich ein Bespannteil 46 beispielsweise in Form eines Netzes, gemäß den Darstellungen nach den Fig.2 und 3 oder in Form eines Bespannstoffes, Bespannleders od. dgl. (nicht dargestellt), am Rückenlehnenelement 10 festlegen. Hierzu kann das Kederprofil 42 in der Art einer Kunststoff-Profilleiste ausgebildet sein, das mittels eines Klebstoff- oder Extrusionsverfahrens mit dem Bespannteil 46 verbindbar ist. Bei der Lösung nach der Fig.2 wird das Bespannteil 46 um das Stab- oder Drahtprofil 44 herumgewickelt und derart klemmend in der zuordenbaren Öffnung 40 festgelegt. Dadurch, dass im Bereich der Schräge 26,26a zwei Längskanäle 36,38 vorhanden sind, kann in Blickrichtung auf die Fig. 2 und 3 gesehen beispielsweise der linke Kanal 38 der Aufnahme des Netzes als Bespannteil 46 dienen und der rechte Kanal 36 der Aufnahme eines Bezugsstoffes oder eines Lederbespannteils, das wiederum vergleichbar wie das Netz festgelegt wird und dann dieses nach außen hin übergreift.

Dem Grunde nach können die Längskanäle aber auch im Bereich des hinteren Hohlprofils 14 sich befinden, um dergestalt das Doppelkammer-Hohlprofil vom jeweiligen Bespannteil her mit abzudecken (nicht dargestellt). Durch die genannten Schrägen 26,26a wird aber jedenfalls erreicht, dass insoweit eine flächige Anlage für das daran verlaufende Bespannteil 46 realisiert ist, so dass insoweit eine verbesserte Abstützung erreicht ist. Auch erlaubt die Schräge 26,26a eine Umlenkung des jeweiligen Bespannteils 46 um mehr als 90°, sofern der in Blickrichtung auf die Fig.2 und 3 gesehen äußere Längskanal 36 angesprochen ist, so dass es zu einer vermehrten Kraftumlenkung kommt und es ist derart sichergestellt, dass das jeweilige Bespannteil 46 über das zuordenbare Endprofil 42,44 nicht aus dem Längskanal 36 gezogen werden kann. Das jeweilige Bespannteil 46 übergreift den freien Bereich 48 des Rahmenteils 12 und ist insoweit von diesem randseitig begrenzt.

Die erfindungsgemäße Lösung braucht nicht für die Verwendung bei Fluggastsitzen beschränkt zu sein, sondern kann dem Grunde nach bei jedem Sitz, auch im Bereich von Kraftfahrzeugen, Anwendung finden und ist insbesondere dort geeignet, wo hohe Steifigkeiten bei geringem Gewicht erwünscht sind. Vorzugsweise wird dabei das Hohlkammerprofil über ein übliches Strangpreßverfahren erhalten.

## Patentansprüche

1. Sitz, insbesondere Fluggastsitz, mit einem Sitzteil und einer Rückenlehne, die ein Rückenlehnenelement (10) aufweist mit einem gebogenen, einstückigen Rahmenteil (12), das aus mindestens einem Hohlprofil (16) besteht, wobei zumindest teilweise das Rahmenteil (12) mindestens ein weiteres Hohlprofil (14) aufweist, wobei die aneinandergrenzenden Hohlprofile (14,16) in üblicher Bewegungsrichtung (Flugrichtung 18) des Sitzes hintereinanderliegend angeordnet sind, wobei in der Gebrauchsstellung im unteren Bereich, vorzugsweise im Bereich des unteren Drittels des Rückenlehnenelementes (10), dasselbe das Doppelkammer-Hohlprofil (14,16) aufweist, wobei der Querschnitt des in üblicher Bewegungsrichtung (Flugrichtung 18) vorangehenden Hohlprofils (16) gleich oder größer dem Querschnitt des nachfolgenden Hohlprofils (14) ist, **dadurch gekennzeichnet, dass** die der üblichen Bewegungsrichtung (Flugrichtung 18) zugekehrte Kammerwand (22) des vorangehenden vorderen Hohlprofils (16) mit einer in Längsrichtung der Rückenlehne verlaufenden Schräge (26) versehen ist, die mit der gegenüberliegenden Schräge (26a) des weiteren vorderen Hohlprofils (16) des U-förmigen Rahmenteils (12) ein imaginäres V (28) ausbildet, dass zumindest teilweise längs des Rückenlehnenelementes (10) in seiner Gebrauchsstellung das in üblicher Bewegungsrichtung (Flugrichtung 18) hintere Hohlprofil (14), insbesondere im oberen Drittel, von der der Schräge (26,26a) gegenüberliegenden Profilwand (30) befreit ist, und dass zumindest ein Hohlprofil (16) mit mindestens einem Längskanal (36,38) versehen ist zur Aufnahme eines Kederprofils (42) oder eines Stabprofils (44), über das jeweils ein flächenförmiges Bespannteil (46) für die Rückenlehne festlegbar ist.

2. Sitz nach Anspruch 1, **dadurch gekennzeichnet, dass** das Rückenlehnenelement (10) U-förmig gebogen ist und dass eine gemeinsame Kammerwand (20) die aneinandergrenzenden Hohlprofile (14,16) voneinander trennt.

3. Sitz nach Anspruch 1 oder 2, **dadurch gekennzeichnet, dass** der jeweilige Längskanal (36,38) im zuordenbaren Hohlprofil (16) integriert ist.

4. Sitz nach Anspruch 3, **dadurch gekennzeichnet, dass** im Bereich der Schräge (26,26a) des einen Hohlprofils (16) zwei in Eckbereichen desselben angeordnete Längskanäle (36,38) vorhanden sind, die jeweils eine Eingriffsöffnung (40) aufweisen, die in die Schräge (26,26a) austritt.

5. Sitz nach einem der Ansprüche 1 bis 4, **dadurch gekennzeichnet, dass** das flächenförmige Bespannteil (46) einmal ein Netz und einmal ein Bespannstoff ist und dass jedem Bespannteil (46) ein eigener Längskanal (36,38) zugewiesen ist.

## Claims

1. Seat, in particular airplane passenger seat, with a seat part and a back rest comprising a back rest element (10) with a arced single-piece frame part (12) consisting of at least one hollow profile (16), whereby at least a part of the frame part (12) comprises at least one further hollow profile (14), whereby the adjacent hollow profiles (14, 16) are located behind each other in the usual movement direction (flying direction 18) of the seat, whereby in the lower area, preferably in the area of the lower third of the back rest element (10) in the usage position, the back rest element comprises the twin-chamber hollow profile (14, 16), whereby the cross-section of the hollow profile (16) foregoing in the usual movement direction (flying direction 18) is equal to or larger than the cross-section of the following hollow profile (14), **characterised in that** the chamber wall (22) of the foregoing front hollow profile (16), which chamber wall facing the usual movement direction (flying direction 18), is equipped with a slope (26) extending in a longitudinal direction of the back rest, which slope forming an imaginary V (28) with the opposite slope (26a) of the other front hollow profile (16) of the U-shaped frame part (12), that the hollow profile (14) situated back in the usual movement direction (flying direction 18) is, in particular in its upper third, exempt from the profile wall (30) opposite to the slope (26, 26a) at least in part along the back rest element (10) in its usage position, and that at least one hollow profile (16) is equipped with at least one longitudinal channel (36, 38) for receiving a rail profile (42) or a rod profile (44), by means of which a surface cover part (46) for the back rest can be affixed.

2. Seat according to Claim 1, **characterised in that** the back rest element (10) is arced in a U-shaped way, and **in that** a common chamber wall (20) separates the adjacent hollow profiles (14, 16) from each other.

3. Seat according to Claim 1 or 2, **characterised in that** the relevant longitudinal channel (36, 38) is integrated into the associated hollow profile (16).

4. Seat according to Claim 3, **characterised in that** in the area of the slope (26, 26a) of one (16) of the hollow profiles two longitudinal channels(36, 38) are placed in corner areas of this hollow profile (16), wherein the longitudinal channels (36, 38) each comprise are an engagement opening (40), which opens out into the slope (26, 26a).

5. Seat according to one of the Claims 1 to 4, **characterised in that** the surface cover part (46) is once a net, and once a cover material, and **in that** each cover part (46) is allocated its own longitudinal channel (36, 38).

## Revendications

1. Siège, en particulier siège pour passager d'aéronef, comprenant une partie de siège et une partie de dossier qui présente un élément de dossier (10) avec une partie de cadre (12) d'une seule pièce cintrée, qui se compose d'au moins un profilé creux (16), la partie de cadre (12) présentant au moins en partie au moins un autre profilé creux (14), les profilés creux adjacents (14, 16) étant disposés l'un derrière l'autre dans la direction de déplacement habituelle (direction de vol 18) du siège, et dans la position d'utilisation dans la région inférieure, de préférence dans la région du tiers inférieur de l'élément de dossier (10), ce dernier présentant le profilé creux à double chambre (14, 16), la section transversale du profilé creux (16) venant en premier dans la direction habituelle de déplacement (direction de vol 18) étant supérieure ou égale à la section transversale du profilé creux suivant (14), **caractérisé en ce que** la paroi de chambre (22) tournée vers la direction habituelle de déplacement (direction de vol 18) du profilé creux avant (16) venant en premier est pourvue d'un biseau (26) s'étendant dans la direction longitudinale du dossier, lequel biseau (26) forme avec le biseau opposé (26a) de l'autre profilé creux avant (16) de la partie de cadre (12) en forme de U un V imaginaire (28), **en ce qu'**au moins en partie le long de l'élément de dossier (10) dans sa position d'utilisation, le profilé creux arrière (14) dans la direction habituelle de déplacement (direction de vol 18), notamment dans le tiers supérieur, est exempt de la paroi profilée (30) opposée au biseau (26, 26a), et **en ce qu'**au moins un profilé creux (16) est pourvu d'au moins un canal longitudinal (36, 38) pour recevoir un profilé formant un rail (42) ou un profilé formant barre (44), par le biais duquel une partie de couverture de surface (46) pour le dossier peut être fixée.

2. Siège selon la revendication 1, **caractérisé en ce que** l'élément de dossier (10) est cintré en forme de U et **en ce qu'**une paroi de chambre commune (20) sépare l'un de l'autre les profilés creux adjacents (14, 16).

3. Siège selon la revendication 1 ou 2, **caractérisé en ce que** le canal longitudinal respectif (36, 38) est intégré dans le profilé creux pouvant être associé (16).

4. Siège selon la revendication 3, **caractérisé en ce que** dans la région du biseau (26, 26a) d'un des profilés creux (16), on prévoit deux canaux longitudinaux (36, 38) disposés dans les régions des coins de ce profilé creux, lesquels canaux présentent chacun une ouverture d'engagement (40) qui sort dans le biseau (26, 26a).

5. Siège selon l'une quelconque des revendications 1 à 4, **caractérisé en ce que** la partie de couverture de surface (46) est une fois un filet, et une fois une toile tendue, et **en ce que** l'on associe à chaque partie de couverture (46) un canal longitudinal propre (36, 38).
